# FASCICULE DE BREVET EUROPEEN

(11) **EP 1 859 213 B1**
(45) Date de publication et mention de la délivrance du brevet: **24.12.2008**
(21) Numéro de dépôt: 06726080.2
(22) Date de dépôt: 14.03.2006
(51) Int. Cl.: F25D 23/06

(54) **CELLULE DE REFRIGERATION EQUIPEE D' UN DISPOSITIF DE FRACTIONNEMENT DE SON ESPACE INTERNE**
KÜHLKAMMER, DIE MIT EINER IHR INNENVOLUMEN TEILENDEN VORRICHTUNG AUSGESTATTET IST
COOLING CHAMBER EQUIPPED WITH A DEVICE PARTITIONING ITS INTERNAL VOLUME

(30) Priorité: 15.03.2005 FR 0502533
(43) Date de publication de la demande: 28.11.2007
(73) Titulaire: AUBINEAU CARROSSERIE, 79700 Mauleon (FR)
(72) Inventeur: PICAUD, Régis, F-44000 Nantes (FR)
(74) Mandataire: Bérogin, Francis
(86) Numéro de dépôt international: PCT/FR2006/000551
(87) Numéro de publication internationale: WO 2006/097614

(56) Documents cités:
- WO-A-01/10673
- DE-A1- 10 102 182
- DE-U1- 8 519 485
- FR-A- 2 635 737
- US-A- 3 057 284

## Description

La présente invention concerne une cellule de réfrigération équipée d'un dispositif qui permet de réaliser un fractionnement de son espace interne.

Ce type de matériel se rencontre notamment dans le domaine des véhicules utilitaires qui sont aménagés pour le transport de denrées dont la conservation nécessite des températures très basses.

Le volume des denrées à conserver à très basse température ne correspond pas toujours au volume global de la cellule de réfrigération ; lorsqu'il est nettement inférieur à ce volume global, il est intéressant de pouvoir réduire le volume de la cellule pour le faire correspondre à celui desdites denrées.

Le fractionnement de l'espace interne de la cellule permet, selon le cas, de gérer deux espaces qui sont alors utilisables pour loger des denrées ou marchandises dont les températures de conservation sont nettement différentes.

Cette possibilité de fractionnement de l'espace interne de la cellule est très intéressante lorsqu'il s'agit d'une cellule équipant un véhicule utilitaire car elle procure une certaine polyvalence qui permet d'utiliser ledit véhicule au maximum de ses capacités.

Le document US 3 057 284 montre une cellule de réfrigération conforme au préambule de la revendication 1. Cette cellule présente un dispositif de fractionnement qui comprend une cloison isolante coulissante. Cette cloison est mobile longitudinalement dans la cellule ; elle est aussi escamotable sous le plafond par pivotement autour d'un axe transversal qui est porté par une sorte de chariot guidé dans des glissières latérales.

La manoeuvre de la cloison est effectuée par un opérateur, manuellement, aussi bien pour le déplacement longitudinal que pour son escamotage par pivotement. Cette manoeuvre de déplacement longitudinal peut, comme suggéré dans le document DE 101 02 188, être facilitée par l'utilisation de moyens moteurs appropriés. De même, la manoeuvre d'escamotage de la cloison par basculement peut aussi, comme décrit dans le document FR 2635737, être assistée au moyen de vérins amortisseurs interposés entre les chariots et ladite cloison afin de faciliter son pivotement et en particulier son escamotage sous le plafond, ou pavillon, de la cellule.

La personne qui est chargée d'effectuer les différentes manoeuvres doit pénétrer dans la cellule et opérer dans une ambiance qui, le plus souvent, est une ambiance glacée, avec une température bien souvent inférieure au zéro degré celsius. Ces conditions de travail difficiles sont parfois la cause d'incidents voire d'accidents corporels pour les opérateurs.

La présente invention propose un perfectionnement à ce type de matériel qui permet d'améliorer nettement les conditions de travail des opérateurs.

Le dispositif de fractionnement selon l'invention offre aussi l'avantage de conserver les caractéristiques des matériels existants ; il s'intègre dans la cellule sans modification de ses capacités actuelles de chargement. Cette particularité, dans le cas d'une cellule de réfrigération de véhicule utilitaire, permet de maintenir le caractère polyvalent dudit véhicule.

De plus, le dispositif selon l'invention présente l'avantage de pouvoir s'adapter sans contraintes sur les cellules existantes en utilisant l'infrastructure déjà en place comme les glissières et les rails d'ancrage et en complétant cette infrastructure avec les moyens nécessaires à l'animation de la cloison.

La cellule de réfrigération, selon l'invention, comprend un espace interne qui est délimité par un plancher, par des parois latérales avec ou sans portes d'accès, par un plafond ou pavillon, par une paroi avant munie d'un évaporateur, et par une paroi arrière munie de portes d'accès, lequel espace interne est divisible par un dispositif de fractionnement qui est constitué, d'une part:
- d'une cloison mobile longitudinalement entre l'avant et l'arrière de ladite cellule, laquelle cloison est portée par un axe transversal pour pouvoir s'escamoter sous le pavillon par pivotement, lequel axe d'articulation de ladite cloison est solidaire d'un chariot qui est guidé longitudinalement à la partie supérieure de ladite cellule ;
- de moyens pour verrouiller la position de ladite cloison lorsqu'elle est en position active verticale de fractionnement et lorsqu'elle est en position inactive horizontale, escamotée sous ledit pavillon ;
et, d'autre part, il comprend des moyens pour positionner automatiquement ladite cloison, soit horizontalement, soit verticalement, lesquels moyens sont constitués : - d'au moins un mécanisme de manoeuvre de ladite cloison, qui est interposé entre ledit chariot et ladite cloison, - d'un système de commande comprenant notamment un boîtier de commande à distance permettant de manoeuvrer ladite cloison, lequel boîtier de commande se situe hors du périmètre d'évolution de ladite cloison, à disposition de l'opérateur, et - des moyens d'alimentation dudit mécanisme de manoeuvre notamment, lequel mécanisme de manoeuvre est logé dans l'encombrement du chariot, dans son épaisseur, entre le pavillon et la face arrière de la cloison lorsque cette dernière est en position inactive horizontale, escamotée sous ledit chariot

Selon une autre disposition de l'invention, le chariot est constitué - de deux longerons disposés sous des glissières qui sont, par exemple, intégrées au pavillon, - d'une traverse avant qui supporte l'axe d'articulation de la cloison et - d'une traverse arrière, et il comprend le mécanisme de manoeuvre qui est constitué des organes d'actionnement et notamment:
- au moins un vérin de manoeuvre qui est interposé entre l'avant dudit chariot et un bras multiplicateur d'effort qui est articulé sur un longeron ;
- une bielle de transmission de mouvement qui est interposée entre ledit bras multiplicateur d'efforts et une manivelle disposée à la partie supérieure de la cloison, au-dessous de l'axe transversal d'articulation de ladite cloison sur ledit chariot, laquelle bielle est sensiblement parallèle audit vérin et auxdits longerons et elle est située entre les deux, à une distance du vérin qui permet de multiplier l'effort de poussée de ce dernier par 5, par exemple.

Toujours selon l'invention, les moyens d'actionnement de la cloison sont constitués d'un couple de mécanismes de manoeuvre, c'est-à-dire qu'ils comprennent : - des vérins disposés dans la partie centrale du chariot, longitudinalement, lesquels vérins sont articulés d'un côté sur la traverse avant dudit chariot et ils sont portés et guidés de l'autre côté par l'intermédiaire d'un support, lequel support coopère avec un rail transversal qui est solidaire des longerons dudit chariot, - des bras multiplicateurs d'efforts articulés sur lesdits longerons latéraux du chariot, - des bielles disposées entre et parallèlement auxdits vérins et auxdits longerons, et l'ensemble constitué desdits vérins, desdits bras et desdites bielles, est logé dans le périmètre et dans l'épaisseur dudit chariot.

Toujours selon l'invention, le verrouillage de la cloison en position inactive horizontale s'effectue au moyen d'au moins un crochet qui est solidaire du chariot au niveau de sa traverse arrière, lequel crochet est manoeuvré au moyen d'un vérin pneumatique du type simple effet à rappel automatique, mis en oeuvre pour déverrouiller ladite cloison lorsqu'elle est accrochée audit chariot

Pour améliorer les conditions de travail de l'opérateur, la cellule de réfrigération selon l'invention comporte un dispositif de fractionnement qui est équipé de moyens pour accompagner et, selon le cas, effectuer automatiquement le déplacement longitudinal de la cloison, lesquels moyens sont constitués d'un organe moteur qui est disposé sur le chariot, lequel organe moteur est actionnable par le boîtier de commande à distance, et il coopère, par le biais d'un jeu de poulies, avec une courroie crantée qui est installée sous le pavillon, tendue parallèlement aux glissières, sur une longueur du même ordre que ces dernières, lesquelles poulies, au nombre de trois, dont l'une, située entre les deux autres, est motrice, sont disposées en triangle pour obtenir un enroulement important sur la poulie motrice, de sorte que l'ensemble constitué par lesdites poulies et ledit moteur, du type moto-réducteur réversible, réalise en plus, par simple inertie, une véritable fonction de frein et surtout de contrôle de la vitesse de déplacement dudit chariot, lorsque les moyens qui assurent son ancrage par rapport au pavillon sont inactifs.

Selon une autre disposition de l'invention, les moyens d'ancrage du chariot par rapport au pavillon sont constitués d'une came articulée sur la traverse arrière dudit chariot et d'un vérin pneumatique du type simple effet à rappel automatique, qui maintient ladite came en position active d'ancrage, laquelle came comporte un doigt qui coopère avec un rail d'ancrage du type rail perforé, installé sous ledit pavillon.

Toujours selon l'invention, la cloison comporte des moyens qui permettent de réaliser à la fois l'étanchéité et son propre verrouillage lorsqu'elle est en position active verticale pour fractionner l'espace interne de la cellule, lesquels moyens sont actionnables à partir du boîtier de commande à distance et sont constitués d'organes gonflables faisant office de joints d'étanchéité, lesquels joints sont installés sur tout ou partie de la périphérie de ladite cloison, au moins sur ses flancs ou chants latéraux.

Selon une autre disposition de l'invention, les joints gonflables qui sont disposés sur les flancs de la cloison comportent un patin central qui est situé entre deux soufflets, lequel patin central assure l'étanchéité entre ladite cloison et les parois latérales de la cellule et il fait également office d'organe de verrouillage en coopérant par frottement avec lesdites parois latérales pour immobiliser ladite cloison lorsqu'elle est en position active verticale de fractionnement.

Selon une autre disposition de l'invention, le chariot comporte un capteur qui permet de détecter la position active verticale de la cloison, lequel capteur, en forme de commutateur du type à contact normalement ouvert en position repos, se ferme lorsque ladite cloison est en position active de fractionnement, et autorise le gonflage des joints d'étanchéité qui sont disposés sur les chants latéraux de ladite cloison.

Selon une autre disposition de l'invention, la cellule de réfrigération comporte des aménagements qui sont propres à l'implantation d'un dispositif de fractionnement de son espace interne, lesquels aménagements sont constitués des moyens d'alimentation des différents organes de manoeuvre et en particulier : - au moins un conduit servant à alimenter les différents organes de manoeuvre en air comprimé et les joints gonflables, au moins un câble électrique pour l'alimentation des composants du système de commande, - un réservoir d'air comprimé affecté à l'alimentation desdits organes de manoeuvre et desdits joints gonflables,
lesquels conduit et câble sont, par exemple, intégrés dans l'épaisseur du pavillon et ils s'étendent jusqu'à l'arrière du pavillon d'où ils repartent vers ledit chariot, portés et guidés par un support constitué d'un câble tendu longitudinalement sous ledit pavillon, au-dessus dudit chariot, lesquels moyens d'alimentation se présentent, dans cette zone, sous la forme de serpentins.

Selon une variante de réalisation, la cloison est constituée de deux panneaux, lesquels panneaux sont séparés par un joint d'étanchéité vertical, et chaque panneau est associé à l'un des mécanismes de manoeuvre. Cette particularité permet à l'opérateur d'accéder facilement à l'espace confiné situé à l'avant de la cellule, tout en conservant une partie de la cloison d'isolation en place afin de limiter les déperditions thermiques.

Mais l'invention sera encore détaillée à l'aide de la description suivante et des dessins annexés, donnés à titre illustrant, et dans lesquels :
- la figure 1 montre de façon schématique et en perspective, une cellule de réfrigération équipée d'un dispositif de fractionnement selon l'invention ;
- la figure 2 représente, d'une façon plus détaillée, le dispositif de fractionnement et en particulier le chariot qui supporte la cloison;
- la figure 3 montre, en perspective, l'un des pivots multifonctions qui sont interposés entre la cloison et le chariot;
- la figure 4 est une section du joint d'étanchéité installé sur les flancs latéraux de la cloison et ce joint permet, en plus, de verrouiller ladite cloison en position active verticale de fractionnement ;
- la figure 5 représente, sous forme de schéma fonctionnel, le chariot avec tous les organes de manoeuvre et de verrouillage de la cloison ainsi que les organes de verrouillage et de déplacement du chariot lui-même ;
- la figure 6 est une élévation partielle et schématique de la partie supérieure de la cloison et des moyens qui permettent son articulation sur la partie avant du chariot et sa manoeuvre ;
- la figure 7 représente les moyens de soutien et de guidage de chacun des vérins des dispositifs de manoeuvre de la cloison ;
- la figure 8 montre, en perspective, les moyens de verrouillage du chariot sur le rail d'ancrage qui est solidaire du pavillon ;
- la figure 9 montre, en perspective également, les moyens qui permettent le verrouillage de la cloison par rapport au chariot, en position inactive, à l'horizontale sous le pavillon ;
- la figure 10 est une représentation schématique de l'ensemble des moyens de commande du dispositif de fractionnement, dans un état qui correspond à la position inactive de la cloison ;
- la figure 11 correspond à la figure 10 mais pour un état actif de la cloison, c'est-à-dire une position normale de fractionnement de l'espace interne de la cellule ;
- la figure 12 montre la partie avant de la figure 5 avec une variante de réalisation de la cloison qui est divisée en deux parties.

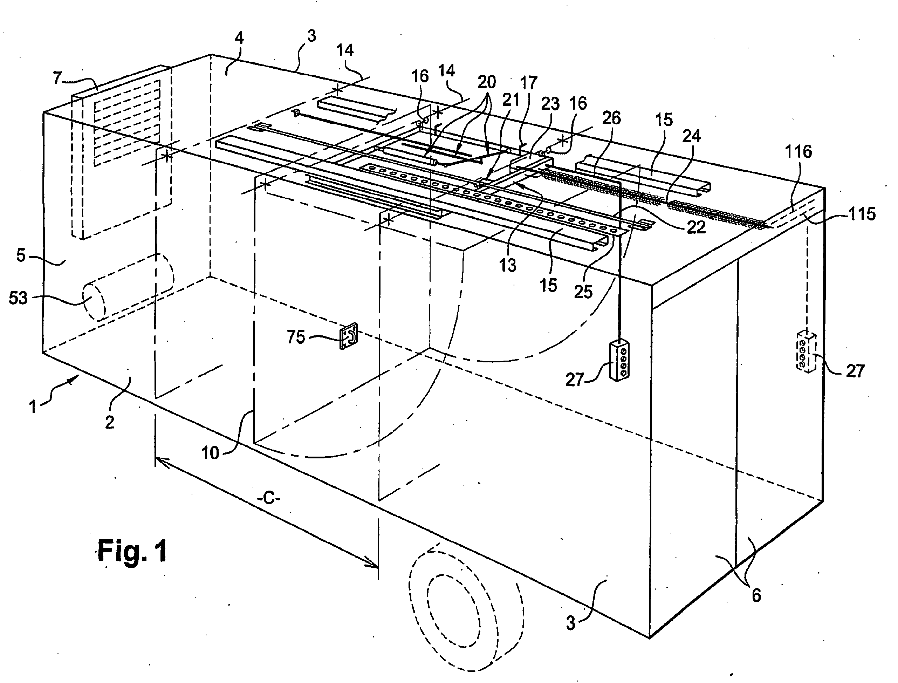

La cellule (1) représentée figure 1 correspond à une carrosserie isotherme et frigorifique qui est associée au châssis d'un véhicule utilitaire du genre fourgon, remorque ou semi-remorque.

Cette cellule est constituée de panneaux isolants ; elle comprend un plancher (2), des parois latérales (3), un plafond ou pavillon (4), une paroi (5) avant et, à l'arrière, des portes (6).

Le groupe de réfrigération (7) est disposé à l'avant de la cellule, sur la paroi (5), et il faut noter que, pour ce type de véhicule, un évaporateur, non représenté, peut aussi être disposé à l'arrière du véhicule pour permettre, grâce au dispositif de fractionnement détaillé ci-après, de proposer deux températures différentes pour la conservation des produits et denrées transportés.

Le dispositif de fractionnement comprend une cloison (10) qui est représentée en position verticale, parallèle à la paroi avant (5) ; dans cette situation, la cloison est en position active de fractionnement et elle divise le volume interne de la cellule en deux parties : une partie à l'avant qui est mise en température par l'évaporateur (7) et une partie à l'arrière qui est à température ambiante ou, selon le cas, maintenue à la température imposée par un autre évaporateur, non représenté, disposé à la partie arrière de ladite cellule.

Le volume des parties avant et arrière peut varier grâce au déplacement de la cloison (10) ; cette cloison peut en effet, comme représentée sur la figure 1, se déplacer longitudinalement sur une distance C qui est adaptée aux besoins et aux types de véhicules.

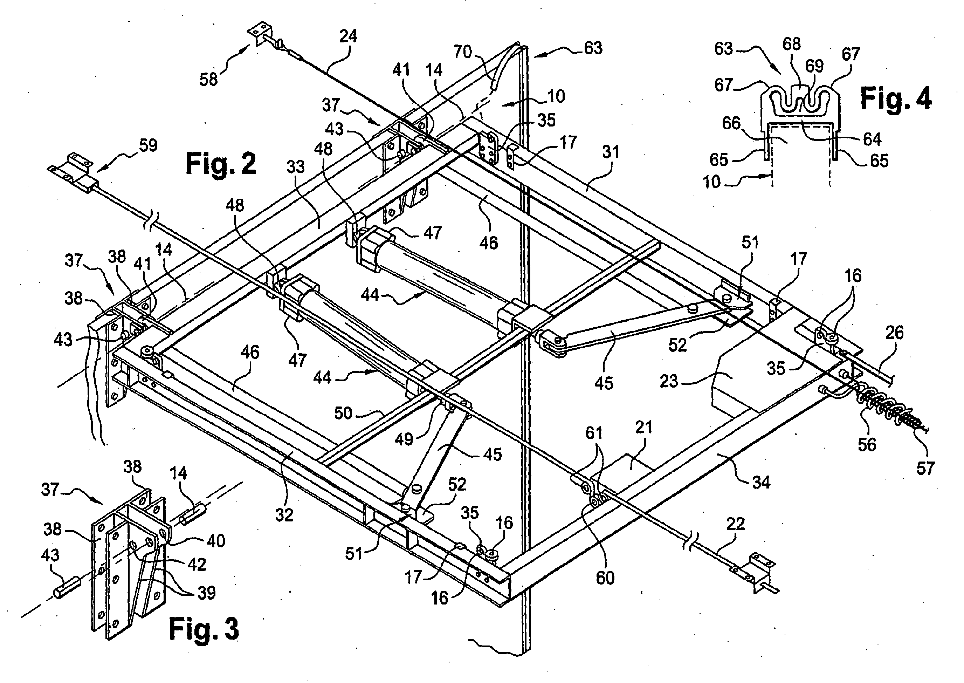

Dans la position verticale active, la cloison (10) s'étend de façon étanche entre le plancher (2) et le pavillon (4), et entre les parois (3) latérales. L'étanchéité est réalisée au moyen de joints à lèvres au niveau du pavillon (4) et du plancher (2) ; entre les parois latérales (3), elle est réalisée au moyen d'un joint particulier qui est détaillé plus loin en liaison avec la figure 4.

La cloison (10) est articulée sur un chariot (13) autour d'un axe (14) qui est disposé transversalement à l'avant dudit chariot. Ce chariot (13) est porté et guidé sous le pavillon (4) par des glissières (15) qui s'étendent longitudinalement sous ledit pavillon et sur une longueur qui correspond sensiblement à la course C de la cloison, augmentée de la longueur dudit chariot.

Le chariot (13) est guidé dans les glissières (15) au moyen de galets et roulements (16) détaillés plus loin en liaison avec la figure 2 et, pour des raisons de sécurité, il comporte aussi des pattes (17), que l'on peut qualifier de pattes anti-chutes, qui apparaissent également figure 2, lesquelles pattes sont en forme d'équerre et s'incrustent dans les glissières correspondantes.

Le chariot (13) se présente sous la forme d'un cadre, comme détaillé plus loin, dans lequel sont logés différents moyens utiles à la manoeuvre de la cloison (10) et en particulier : - les moyens qui permettent de réaliser le pivotement de ladite cloison autour de l'axe (14), - les moyens qui permettent de la déplacer longitudinalement avec ledit chariot, - les moyens qui permettent de réaliser son verrouillage sur ledit chariot, en position escamotée sous le pavillon et encore, - les moyens qui permettent de verrouiller ledit chariot par rapport audit pavillon, c'est-à-dire de réaliser son ancrage et de l'immobiliser longitudinalement.

Ces différents moyens apparaissent en partie figure 1 et seront détaillés ensuite avec les autres figures.

Ainsi figure 1, on trouve :
- le mécanisme (20) qui permet de faire pivoter la cloison (10) autour de son axe (14), lequel mécanisme est intégré dans le cadre du chariot (13), dans son épaisseur ;
- l'organe moteur (21) qui déplace longitudinalement ledit chariot et qui coopère avec une courroie (22) tendue parallèlement aux glissières (15) et sur une longueur équivalente à celle de ces dernières ;
- un coffrent (23) qui fait partie du système général de commande et renferme les différents composants qui permettent la distribution et l'alimentation énergétique de tous ces organes et mécanismes de manoeuvre, lequel coffret est relié aux sources énergétiques par l'intermédiaire de serpentins qui sont guidés sur un câble (24), lequel câble est tendu parallèlement auxdites glissières, jusqu'à l'extrémité arrière du pavillon (4) ;
- un rail (25) muni de trous, solidaire dudit pavillon (4), lequel rail est disposé parallèlement auxdites glissières (15) avec une longueur similaire, et il permet, grâce à des moyens disposés sur le chariot (13) et détaillés plus loin, l'ancrage dudit chariot (13) et son immobilisation par rapport audit pavillon (4).

Comme représenté en traits forts, le chariot (13) comporte, à sa partie arrière, un bras (26) qui permet de suspendre et de mettre à disposition de l'opérateur, en dehors de la zone d'évolution de la cloison (10), un boîtier (27) qui fait partie du système de commande et sur lequel sont regroupés tous les boutons et commutateurs utiles à la manoeuvre de ladite cloison.

Ce boîtier (27) peut aussi être positionné à l'arrière de la cellule, près des portes (6). Dans ce cas il est relié au chariot (13) au moyen d'un serpentin qui est également enroulé sur le câble (24).

La figure 2 montre, d'une façon plus détaillée, le chariot (13) muni des éléments dont il a été question auparavant en liaison avec la figure 1.

Le chariot (13) est constitué d'un cadre qui comprend deux longerons (31) et (32), une traverse avant (33) qui porte la cloison (10), et une traverse arrière (34).

Aux quatre coins du cadre, on trouve des modules (35) qui sont munis des galets et roulements (16) qui coopèrent avec les glissières (15) installées sous le pavillon (4), comme détaillés précédemment. On trouve également les pattes (17) anti-chutes qui se présentent sous la forme d'équerres, lesquelles pattes sont fixées sur les longerons (31) et (32) et leur aile horizontale se glisse dans la glissière (15).

Sur l'extérieur de la traverse (33) avant, on trouve les moyens de fixation et d'articulation de la cloison (10). La cloison elle-même est constituée d'un panneau d'isolation constitué, par exemple, d'un complexe comprenant des parements appropriés et une âme en matériau du genre nid d'abeille, ce qui permet de disposer d'une cloison isolante rigide mais de grande légèreté et donc plus facilement manoeuvrable.

Pour sa liaison avec le chariot (13), la cloison (10) comporte une paire de pivots (37) multifonctions. Ces pivots (37) sont aménagés pour s'ancrer efficacement sur la cloison (10) au moyen de chapes latérales (38), laquelle cloison comporte à cet effet des entailles en forme de lumières ouvertes pratiquées sur une profondeur suffisante à sa partie supérieure pour réaliser une bonne solidarisation avec lesdites chapes. L'écartement entre les pivots (37) est de l'ordre de la moitié de la largeur de la cloison (10).

Chaque pivot (37) comporte des flasques (39) qui sont perpendiculaires aux chapes (38) et à la cloison (10). Ces flasques (39) comportent des alésages (40) et forment une autre chape pour accueillir l'axe (14) qui sert d'axe d'articulation entre la cloison (10) et le chariot (13). La distance entre ces alésages (40) et la surface de la cloison (10) située du côté du chariot (13), est inférieure à l'épaisseur dudit chariot.

L'axe d'articulation (14) est porté par le chariot (13) au moyen d'un support (41) qui est disposé en saillie à l'avant de la traverse (33) dudit chariot. Cet axe (14) se situe le plus près possible du pavillon (4).

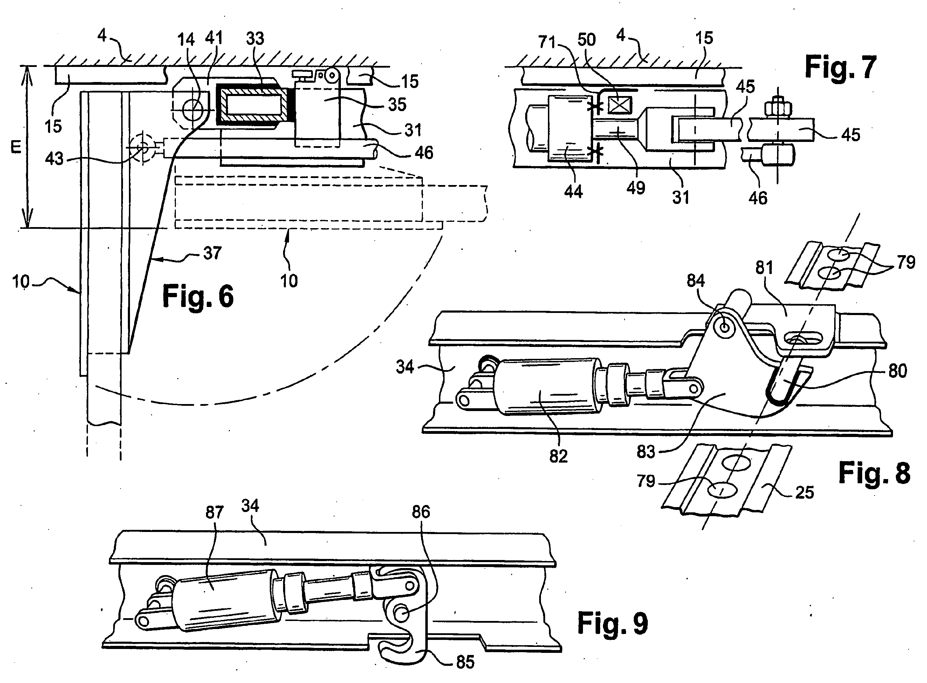

Les flasques (39) de chaque pivot (37) sont en plus aménagés comme une manivelle ; ils comportent des alésages (42) disposés en dessous du niveau des alésages (40) pour accueillir un autre axe (43) lequel axe coopère avec le mécanisme (20) correspondant qui sert pour la manoeuvre de la cloison (10). Ces alésages (42) se situent, comme visibles également plus loin en liaison avec la figure 6, à une distance des alésages (40) qui est de l'ordre de l'épaisseur du chariot (13), laquelle distance constitue le bras de la manivelle, et l'alignement de ces alésages (40 et 42) fait un angle compris entre 45 et 55° avec les chapes (38) ou avec la surface de la cloison (10).

La cloison (10) est en fait manoeuvrée par le biais d'un couple de mécanismes de manoeuvre (20) qui sont identiques et disposés symétriquement de part et d'autre de l'axe longitudinal médian du chariot (13). Chaque mécanisme est constitué :
- d'un vérin (44) qui est disposé dans la partie centrale du chariot (13) ;
- d'un bras (45), actionné par ledit vérin (44), lequel bras constitue un organe multiplicateur d'efforts ;
- d'une bielle (46) interposée entre ledit bras (45) et l'axe (43) du pivot (37).

Le vérin (44) est solidaire de la traverse avant (33) du chariot (13), il est articulé du côté de l'extrémité de son fût (47) sur un pivot (48) qui est monté sur ladite traverse (33) et, à l'autre extrémité, du côté de sa tige (49), ledit vérin (44) comporte un support qui lui permet d'être porté par un rail (50) qui s'étend transversalement entre les longerons (31, 32) dudit chariot (13) et d'être libre de pivoter du fait de son léger mouvement d'oscillation.

Cette liaison entre le vérin (44) et le rail (50) sera détaillée plus loin, figure 7.

Le vérin (44) actionne le bras (45) qui est articulé, au moyen d'un pivot (51) sur le longeron (31, 32). Ce pivot (51) est en forme de chape et comporte un flasque inférieur (52) qui fait office de guide pour soutenir le bras (45) dans le plan horizontal. Le bras se présente sous la forme d'une simple barre du genre plat et il est aménagé pour multiplier l'effort de poussée du vérin (44) dans un rapport qui est, par exemple, de l'ordre de 5.

Cet aménagement du mécanisme de manoeuvre, avec un bras multiplicateur d'efforts, permet d'utiliser des composants, et en particulier des vérins (44), dont l'épaisseur est faible pour permettre leur intégration dans l'épaisseur du chariot (13), lequel chariot est lui-même réalisé avec des profilés de faible épaisseur, le tout pour limiter au maximum l'épaisseur globale du dispositif de fractionnement, c'est-à-dire le chariot (13) et la cloison (10) en position escamotée sous ledit chariot, et son emprise sous le pavillon afin de ne pas entraver la capacité de chargement de la cellule.

Le bras (45) multiplicateur d'efforts entraîne la bielle (46). Cette bielle s'étend parallèlement aux longerons (31, 32) qu'elle côtoie et elle est articulée sous le bras (45) et sur l'axe (43) de la manivelle aménagée sur le pivot (37) de la cloison (10).

Les vérins (44) sont pneumatiques, alimentés en air comprimé sous une pression de l'ordre de 5 à 6 bars. L'air comprimé, dans le cas d'une cellule de véhicule utilitaire, comme représentée figure 1, est de préférence stocké dans un réservoir (53) qui est associé à ladite cellule (1), lequel réservoir est alimenté par des moyens appropriés dudit véhicule.

Le coffret (23) disposé sur le chariot (13), dans un angle de sa partie arrière, regroupe les composants électropneumatiques du type distributeur notamment, qui permettent d'alimenter les vérins (44) et les autres organes détaillés ci-après. Le coffret (23) est lui-même relié aux sources pneumatique et électrique par l'intermédiaire de serpentins : un serpentin (56) pour l'air comprimé et un serpentin (57) pour l'électricité, lesquels serpentins, compte tenu du mouvement longitudinal du chariot (13) sont portés et guidés par le câble (24)) qui est tendu et s'étend sous le pavillon (4) auquel il est fixé par des moyens appropriés dont un tendeur (58).

Sur la traversé (34) arrière du chariot, on trouve aussi l'organe moteur (21) qui permet, par l'intermédiaire de la courroie (22), de déplacer ledit chariot longitudinalement, avec la cloison (10), dans la cellule. La courroie (22), qui est du type courroie crantée, est fixée au pavillon par des moyens appropriés, dont un tendeur (59).

L'organe moteur (21) est constitué d'un moteur électrique, du type moto-réducteur réversible, et il comporte une poulie motrice (60) qui est encadrée par une paire de poulies (61) libres. Ces poulies (61) sont disposées au-dessus et de part et d'autre de la poulie (60) motrice de façon à effectuer un enroulement de la courroie (22) sur cette poulie motrice. Les trois poulies sont disposées en triangle ; elles guident et enroulent la courroie (22) sur la poulie (60) motrice, couvrant au moins la moitié de son pourtour.

L'organe moteur (21) a en effet, en coopération avec la courroie (22), une fonction complémentaire lorsqu'il est inactif ; il fait office de frein pour le chariot, c'est-à-dire qu'il permet de contrôler son mouvement éventuel et sa vitesse dans certains cas de figure : lorsque, par exemple, le mouvement est provoqué par l'opérateur, manuellement, ou lorsque le mouvement est un mouvement de réaction et de recul survenant lors de la mise en place de la cloison (10) qui peut buter sur les marchandises, ou encore lorsque le mouvement est un mouvement accidentel provoqué par simple gravité si le véhicule est stationné sur un endroit en pente.

On remarque encore, figure 2, la présence d'un joint (63) disposé sur le flanc latéral de la cloison (10). Ce joint (63) est un joint particulier qui est gonflable avec de l'air comprimé, par l'intermédiaire de moyens appropriés disposés dans le coffret (23), à partir du boîtier de commande (27).

La cloison (10) comporte en fait un joint (63) gonflable sur chacun de ses flancs latéraux et des joints classiques, non représentés, du type à lèvres, sur ses extrémités supérieure et inférieure.

Le joint gonflable (63) est représenté de façon détaillée figure 4. Il est réalisé avec un matériau approprié du genre caoutchouc et comporte une semelle (64) qui est munie de deux rebords (65) disposés à l'équerre pour épouser la bordure de la cloison et permettre une fixation pratique sur ladite bordure.

Le joint gonflable proprement dit est constitué de deux soufflets (67) qui encadrent un patin (68), lequel patin assure l'étanchéité par son contact avec la paroi latérale (3) correspondante de la cellule. La chambre (69) du joint est alimentée en air comprimé sous une pression très faible, de l'ordre de 0,5 bar, par exemple, au moyen d'un conduit (70) souple qui s'étend jusqu'au coffret (23).

Les patins (68), lorsqu'ils sont en contact avec les parois latérales (3) de la cellule, permettent de verrouiller la cloison (10) en position active de fractionnement. Ces patins (68) constituent une pièce d'usure ; leur épaisseur est choisie en conséquence.

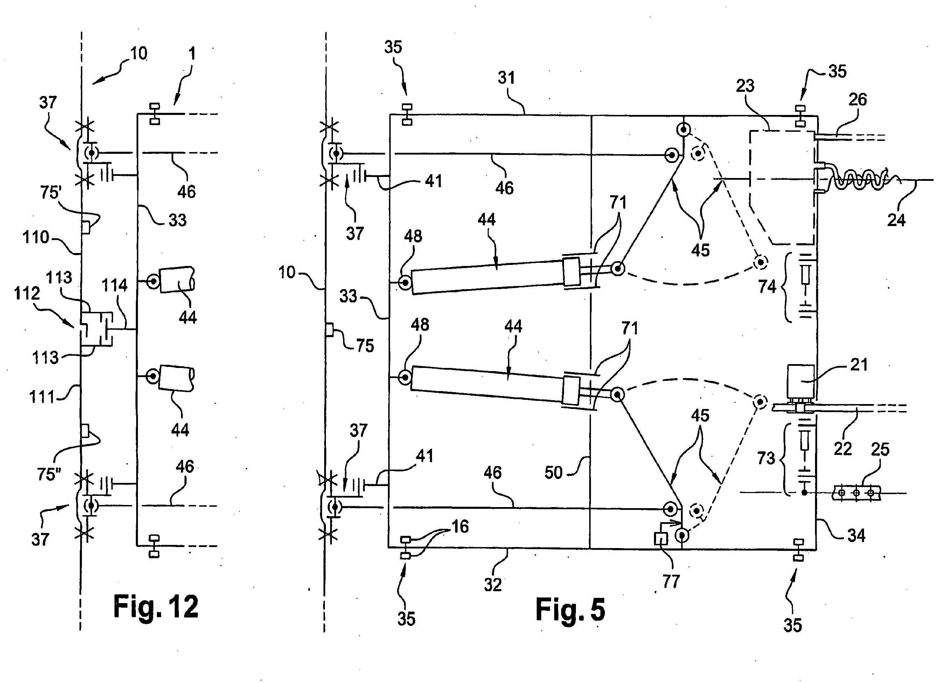

La figure 5 est une représentation, sous forme de schéma fonctionnel, de l'ensemble des éléments constitutifs du dispositif de fractionnement selon l'invention.

On retrouve le chariot (13) en forme de cadre, muni au niveau de ses angles, sur les longerons (31, 32), des modules (35) équipés de galets et roulements (16). Ce chariot porte la cloison (10) au niveau de sa traverse (33) disposée à l'avant, laquelle cloison est articulée autour des axes (14) qui sont interposés entre les supports (41) de la traverse (33) et les pivots (37) de ladite cloison. Le basculement de la cloison (10) s'effectue par l'intermédiaire des pivots (37) qui sont aménagés en forme de manivelles et par l'intermédiaire des bielles (46) du mécanisme de manoeuvre.

Le mécanisme de manoeuvre comprend les vérins (44) et les bras (45) qui actionnent les bielles (46) avec une multiplication notable de l'effort disponible au niveau desdits vérins.

Lorsque les vérins (44) actionnent les bras (45), ils oscillent légèrement autour de l'axe d'articulation de leur pivot (48) ; l'extrémité des vérins, côté tige (49), comporte un aménagement support en forme de guide (71), détaillé plus loin figure 7, qui coopère avec le rail (50) disposé transversalement entre les longerons (31, 32) du chariot (13).

On retrouve également sur le schéma, figure 5, le coffret (23) qui reçoit l'air comprimé et l'alimentation électrique par les serpentins (56) et (57) respectivement, lesquels serpentins sont portés et guidés sur le câble (24).

Le contenu du coffret (23) est détaillé plus loin ; il regroupe les composants qui permettent l'alimentation des différents organes de manoeuvre comme les vérins pneumatiques (44), le moteur électrique (21) et des organes de verrouillage (73) et (74).

L'organe de verrouillage (73), détaillé figure 8, permet de réaliser l'ancrage du chariot (13) par rapport au pavillon (4) de la cellule et donc de l'immobiliser longitudinalement ; l'organe de verrouillage (74), détaillé figure 9, permet de verrouiller la cloison (10) sous le chariot(13), en position inactive. La cloison (10) comporte sur sa surface, côté chariot, une attache (75), visible figure 1, qui coopère avec un crochet détaillé plus loin en liaison avec la figure 9, pour permettre son verrouillage sur ledit chariot.

Les différentes manoeuvres de la cloison (10) sont effectuées au moyen du boîtier (27) qui est à disposition de l'opérateur, en dehors de la zone d'évolution de ladite cloison.

Les différents organes de verrouillage peuvent être placés sous le contrôle de capteurs, non représentés, qui, de façon classique, vont autoriser ou interdire des mouvements du chariot (13) et/ou de la cloison (10) si ces derniers ne sont pas libérés.

De même, des capteurs du type fin de course, non représentés, peuvent être placés aux extrémités de l'une des glissières (15) pour sécuriser les mouvements du chariot (13).

La figure 5 fait apparaître un capteur (77) qui détecte la position verticale de la cloison (10), c'est-à-dire sa position active de fractionnement de l'espace interne de la cellule (1) ; ce capteur (77) peut, comme indiqué sur le schéma, être interposé entre le longeron (32) et le bras (45).

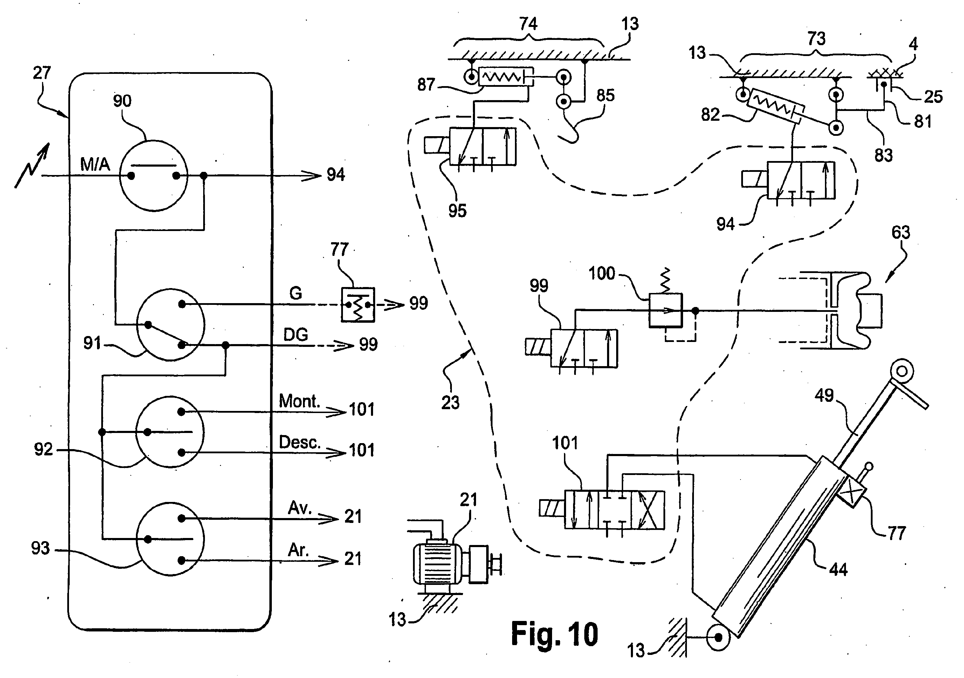

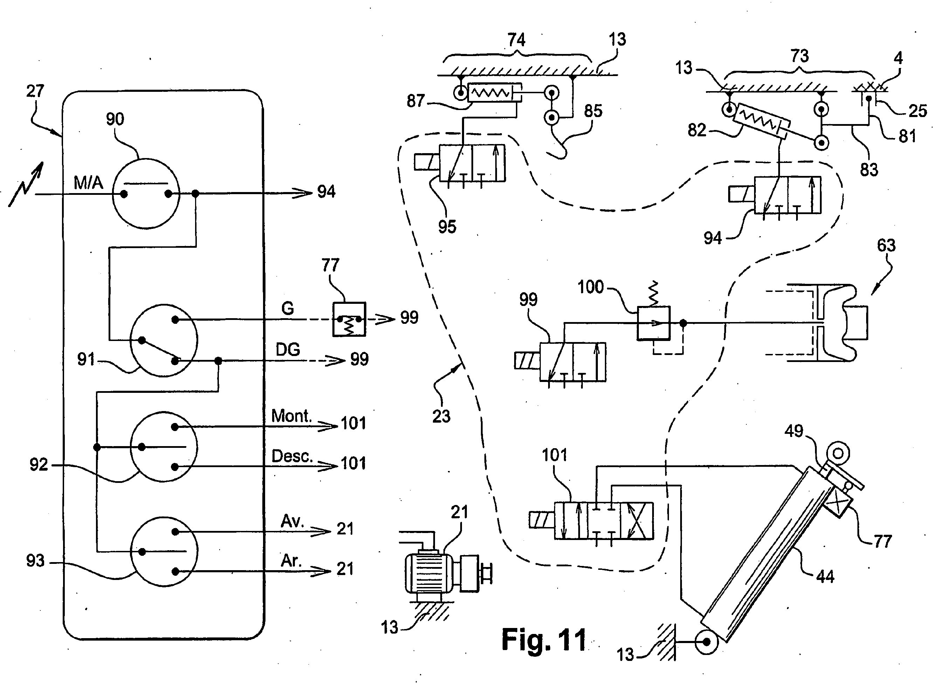

D'autres détails concernant ce capteur (77) et sa fonction seront donnés plus loin, en liaison avec les figures 10 et 11.

La figure 6 montre le détail de l'articulation de la cloison (10) sur le chariot (13). Seule la partie supérieure de la cloison est représentée, en traits forts pour la position verticale et en traits mixtes fins pour la position basculée à l'horizontale.

Le pivotement de la cloison (10) s'effectue autour de l'axe (14) qui est interposé entre le pivot (37) solidaire de ladite cloison et le support (41) qui est solidaire de la traverse (33) avant du chariot (13). Sous cette traverse avant, la bielle (46) est articulée sur l'axe (43) du pivot (37) ; la traction opérée par ladite bielle sur l'axe (43) fait basculer la cloison (10) autour de l'axe (14), jusqu'à la position horizontale.

Dans cette position horizontale, l'épaisseur E du dispositif correspond sensiblement l'épaisseur de la cloison (10) plus l'épaisseur du chariot (13), c'est-à-dire l'épaisseur de ses longerons (31, 32), plus l'épaisseur des glissières (15). A noter que ces glissières peuvent être intégrées dans l'épaisseur du pavillon (4) de façon à réduire encore plus l'encombrement de l'équipage mobile constitué du chariot (13) et de la cloison (10).

Cette épaisseur E particulièrement réduite provient aussi du choix des composants comme les vérins (44) qui s'inscrivent dans l'épaisseur des longerons (31, 32) du chariot (13), comme détaillé auparavant.

La figure 7 montre le guidage du vérin (44) au niveau de son extrémité, du côté de sa tige (49). L'extrémité du vérin comporte le guide (71) qui coopère avec le rail (50) disposé transversalement, entre les longerons (31, 32). Le guide (71) se présente sous la forme d'une équerre fixée sur l'extrémité du vérin (44), et il peut comporter un patin de glissement, non représenté, en matériau approprié, pour faciliter son glissement sur le rail (50).

Toujours figure 7, on remarque également le bras (45) et la bielle (46) qui est articulée sous ledit bras (45).

La figure 8 montre le détail des organes de verrouillage (73) qui permettent de réaliser l'ancrage du chariot (13) par rapport au pavillon (4) et en particulier sur le rail (25) qui est solidaire de ce pavillon. Le rail d'ancrage (25) a une section en forme d'oméga et sa partie centrale est munie de trous (79) régulièrement espacés dans lesquels peut s'insérer un doigt (80). Ce doigt (80) est guidé par une platine (81) qui est solidaire de la traverse arrière (34) du chariot (13), et il est mobile sous l'effet d'un vérin (82).

Le vérin (82) est solidaire de la traverse (34) et il manoeuvre une pièce en forme d'équerre (83) qui porte le doigt (80), laquelle équerre est articulée sur la traverse (34) au moyen d'un axe (84) qui est disposé sur le dessus de ladite traverse. Le vérin (82) est représenté dans une position de travail où il maintient le doigt (80) en position inactive de verrouillage ; ce vérin (82) est en fait un vérin du type simple effet et il est muni d'un ressort de rappel vers la position repos. En position repos, le vérin (82) place et maintient automatiquement le doigt (80) en position active de verrouillage.

La figure 9 montre les organes de verrouillage (74) qui maintiennent la cloison (10) dans sa position inactive, c'est-à-dire dans une position escamotée sous le chariot (13). Ces organes de verrouillage sont constitués d'un crochet (85) qui coopère avec l'attache (75) de la cloison (10), laquelle attache est visible figures 1 et 5. Ce crochet (85) est articulé autour d'un axe (86) solidaire de la traverse (34) et il est manoeuvré par un vérin (87) ancré lui aussi sur ladite traverse.

Le crochet (85) et le vérin (87) sont représentés en position active de verrouillage de la cloison (10). Le crochet (85) est sollicité en permanence dans cette position active par le vérin (87) qui est du type simple effet à rappel automatique par ressort. Le crochet (85) s'escamote soit sous l'effet du vérin (87) lorsque ce dernier est activé par air comprimé, soit automatiquement par l'attache (75) de la cloison (10) lorsque cette dernière est escamotée et mise en position inactive par le mécanisme de manoeuvre (20).

Le système de commande, représenté schématiquement figures 10 et 11, comprend, d'une part, le boîtier (27) qui est à disposition de l'opérateur et, d'autre part, les différents composants qui sont disposés dans le coffret (23).

Le boîtier (27) se présente sous la forme d'un bloc parallélépipédique qui comporte plusieurs boutons :
- un bouton poussoir (90) du type à rappel automatique qui constitue notamment l'interrupteur marche/arrêt ;
- un bouton sélecteur (91) du type à deux positions stables qui permet de réaliser le gonflage (G) des joints (63) de la cloison (10) et leur dégonflage (DG) ;
- un bouton sélecteur (92) du type à trois positions dont une position centrale neutre avec rappel automatique sur ledit neutre pour les deux autres positions, lequel bouton permet, par exemple, de manoeuvrer la cloison (10) pour la faire descendre (Desc.) et la placer en position active verticale ou, au contraire la faire monter (Mont.) pour la placer en position inactive horizontale, sous le chariot (13) ;
- un bouton (93) identique au bouton (92) précédent pour réaliser le déplacement longitudinal dudit chariot (13) vers l'avant (Av) de la cellule ou vers l'arrière (Ar).

La forme de ce boîtier (27) et la disposition des différents boutons procure une grande sécurité pour la manoeuvre du dispositif de fractionnement. En effet, l'opérateur est obligé d'utiliser ses deux mains pour effectuer des manoeuvres du chariot (13) et ou de la cloison (10).

Les différents composants disposés dans le coffret (23) sont schématisés figures 10 et 11, entourés par une ligne en pointillés, et les organes associés à ces composants sont disposés tout autour.

Ainsi : - le vérin (82) est mis en oeuvre par une électrovanne (94) pour libérer le chariot (13) ; - le vérin (87) est mis en oeuvre par une électrovanne (95) pour actionner le crochet (85) et libérer la cloison (10) de sa position inactive, à l'horizontale, sous ledit chariot ; - le joint (63) est mis en oeuvre par l'intermédiaire d'une électrovanne (99) et d'un dispositif (100) du type réducteur de pression, ramenant ladite pression à une valeur de l'ordre de 0,5 bar et - les vérins (44), un seul est représenté, sont mis en oeuvre simultanément par une électrovanne (101) pour faire passer ladite cloison (10) de la position inactive à la position active verticale de fractionnement et inversement.

Pour maintenir le joint (63) gonflé, un clapet classique du type anti-retour est associé à l'électrovanne (99), en amont de cette dernière.

De même, pour maintenir la cloison (10) dans une position quelconque ou intermédiaire, l'électrovanne (101) peut être associée à des clapets du type anti-retour pilotés, placés en aval de ladite électrovanne.

La figure 10 montre le système de commande lorsque la cloison (10) est en position inactive, les vérins (44) sont alimentés pour sortir leur tige (49) et, dans ce cas, le capteur (77), qui fait office de commutateur, est ouvert. Ce capteur-commutateur (77) apparaît sur les figures 10 et 11 à des endroits différents de celui signalé figure 5 pour simplifier et surtout pour mieux illustrer le fonctionnement du dispositif : il est représenté associé au corps du vérin (44) et il figure également en aval du bouton sélecteur (91), à la sortie du boîtier de commande (27).

La figure 11 montre le système de commande avec les vérins (44) rétractés, ce qui signifie que la cloison (10) est verticale, en position active de fractionnement ; dans cette position, le capteur-commutateur (77) est fermé.

Le bouton poussoir (90) permet à l'opérateur d'agir sur le dispositif de fractionnement. Il agit directement sur les moyens d'ancrage du chariot (13) de façon à le libérer par rapport au pavillon (4) ; il agit en fait sur l'électrovanne (94) qui réalise l'alimentation du vérin (82), lequel vérin actionne le doigt (81) qui se désengage du rail (25). Ainsi, dès que l'opérateur presse le bouton (90), le chariot (13) est libre par rapport au pavillon (4) ; il peut se déplacer longitudinalement mais il est retenu, comme expliqué précédemment, par l'organe moteur (21).

Le désancrage du chariot (13) est donc totalement indépendant de la position de la cloison (10). Ce n'est pas le cas pour le gonflage du joint (63).

On remarque, figure 10, que, du fait de l'état du vérin (44), le capteur-commutateur (77) est ouvert. Le bouton sélecteur (91) ne peut pas permettre de réaliser le gonflage du joint (63). En revanche, ce bouton (91) permet de réaliser le dégonflage du joint en agissant sur l'électrovanne (99). Cette position dégonflage du bouton (91) permet aussi aux boutons (92) et (93) d'être opérationnels pour, respectivement, réaliser la montée ou la descente de la cloison (10) et réaliser le déplacement longitudinal du chariot (13) avec ladite cloison.

Le bouton (92) agit sur l'électrovanne (101) qui alimente les vérins (44) de manoeuvre de la cloison (10) ; le bouton (93) agit sur le circuit d'alimentation du moteur (21) qui, par l'intermédiaire de la courroie (22), déplace le chariot (13) sous le pavillon (4).

La figue 10 montre que, lorsque le capteur-commutateur (77) est fermé, le bouton (91) permet de gonfler le joint (63) en agissant sur l'électrovanne (99). En revanche, dans cette position gonflage, le bouton (91) supprime la possibilité d'utiliser les boutons (92) et (93) et donc de faire monter ou descendre la cloison (10) et de déplacer le chariot (13).

La figure 11 représente une variante de réalisation du dispositif de fractionnement et en particulier de la cloison (10). Cette cloison est constituée de deux panneaux (110) et (111), séparés par un système de joint (112) vertical. Chaque panneau est suspendu au chariot et articulé au moyen des pivots (37) et de pivots complémentaires (113) disposés sur le rebord de chaque panneau, coopérant avec un support (114) placé dans la partie centrale avant du chariot (13).

L'opérateur peut se contenter de manoeuvrer un seul panneau pour accéder à la partie avant de la cellule ; ce panneau (110) est manoeuvré par l'intermédiaire de l'un des vérins (44) et de la bielle (46) ; il peut être placé en position inactive et être verrouillé au chariot (13) par son attache (75').

L'autre panneau (111) peut être manoeuvré, selon les besoins, par l'autre vérin (44). Il comporte de la même façon, une attache (75") qui lui permet d'être verrouillé sous le chariot (13). Des moyens appropriés complémentaires sont alors prévus tant sur le boîtier de commande (27) que dans le coffret (23) pour permettre ces différentes manoeuvres des deux cloisons (110) et (111).

Tous ces aménagements apportés au dispositif de fractionnement de l'espace interne de la cellule ne sont pas sans conséquences sur l'aménagement de la cellule elle-même. On remarque, figure 1, la présence du réservoir (53) pour l'air comprimé qui alimente les différents organes de manoeuvre et en particulier les vérins installés sur le chariot (13). Un conduit (115) s'étend entre le réservoir (53) et l'arrière du pavillon (4) ; de même un câble (116) pour l'alimentation électrique des différents organes situés sur le chariot (13) s'étend de l'avant de la cellule jusqu'à la partie arrière du pavillon (4). Le conduit (115) et le câble (116) sont, de préférence, noyés dans l'épaisseur du pavillon (4).

A la partie arrière du pavillon (4), le conduit (115) et le câble (116) repartent vers l'avant, jusqu'au chariot (13) ; ils sont portés et guidés au moyen du support (24) en forme de câble qui s'étend entre l'arrière dudit pavillon (4) et la position extrême avant dudit chariot (13). Pour être portés et guidés par le support (24), le conduit (115) et le câble (116) sont enroulés en forme de serpentins, comme indiqués précédemment, en liaison avec la figure 2 notamment.

## Revendications

1. Cellule de réfrigération dont l'espace interne est délimité par un plancher (2), des parois latérales (3), un plafond ou pavillon (4), une paroi avant (5) munie d'un évaporateur (7), et une paroi arrière (6) munie des portes d'accès, lequel espace interne est divisible au moyen d'un dispositif de fractionnement qui est constitué :
- d'une cloison (10) mobile longitudinalement entre l'avant et l'arrière de ladite cellule, laquelle cloison est portée par un axe transversal (14) pour pouvoir s'escamoter sous ledit pavillon par pivotement, lequel axe (14) est solidaire d'un chariot (13) qui est guidé longitudinalement à la partie supérieure de ladite cellule ;
- de moyens pour verrouiller la position de ladite cloison (10) lorsqu'elle est en position active verticale de fractionnement et lorsqu'elle est en position inactive horizontale, escamotée sous ledit pavillon (4),
**caractérisée en ce qu'**elle comprend, au niveau dudit dispositif de fractionnement, des moyens pour positionner automatiquement ladite cloison(10), soit horizontalement, soit verticalement, lesquels moyens sont constitués : - d'au moins un mécanisme de manoeuvre (20) de ladite cloison qui est interposé entre ledit chariot (13) et ladite cloison, - d'un système de commande comprenant un boîtier (27) qui permet de commander à distance la manoeuvre de ladite cloison, lequel boîtier se situe hors du périmètre d'évolution de ladite cloison, à disposition de l'opérateur, et - des moyens d'alimentation dudit mécanisme de manoeuvre notamment, lequel mécanisme de manoeuvre (20) est logé dans l'encombrement dudit chariot (13), dans son épaisseur, entre le pavillon (4) et la face arrière de la cloison (10) lorsque cette dernière est en position inactive horizontale, escamotée sous ledit chariot

2. Cellule de réfrigération selon la revendication 1, **caractérisée en ce que** le chariot (13) est constitué de deux longerons (31, 32) disposés sous les glissières (15), d'une traverse avant (33) qui supporte l'axe d'articulation (14) de la cloison (10) et d'une traverse arrière (34) et **en ce que** le mécanisme de manoeuvre (20) comprend des organes d'actionnement et, notamment:
- au moins un vérin (44) de manoeuvre qui est interposé entre l'avant dudit chariot (13) et un bras (45) multiplicateur d'effort qui est articulé sur un longeron ;
- une bielle (46) de transmission de mouvement qui est interposée entre ledit bras (45) multiplicateur d'efforts et une manivelle disposée à la partie supérieure de la cloison (10), au-dessous de l'axe transversal (14) d'articulation de ladite cloison sur ledit chariot, laquelle bielle (46) est sensiblement parallèle audit vérin (44) et auxdits longerons (31) et (32) dudit chariot (13), située entre les deux à une distance dudit vérin (44) qui permet de multiplier l'effort de poussée par cinq, par exemple.

3. Cellule de réfrigération selon la revendication 2, **caractérisée en ce qu'**elle comporte des moyens d'actionnement de la cloison (10) constitués d'un couple de mécanismes de manoeuvre (20) qui comprend : - des vérins (44) disposés dans la partie centrale du chariot (13), longitudinalement, lesquels vérins sont articulés d'un côté sur la traverse avant (33) dudit chariot et ils sont portés et guidés de l'autre côté par l'intermédiaire d'un support (71), lequel support coopère avec un rail transversal (50) qui est solidaire des longerons (31, 32) dudit chariot, - des bras (45) multiplicateurs d'efforts qui sont articulés sur les longerons latéraux (31, 32) dudit chariot, - des bielles (46) disposées entre et parallèlement auxdits vérins (44) et auxdits longerons, et l'ensemble est logé dans le périmètre et l'épaisseur dudit chariot (13).

4. Cellule de réfrigération selon la revendication 3, **caractérisée en ce qu'**elle comporte des moyens (74) pour verrouiller la cloison (10) en position inactive horizontale, lesquels moyens sont constitués d'au moins un crochet (85) qui est disposé et articulé sur la traverse arrière (34) du chariot (13), lequel crochet est manoeuvré au moyen d'un vérin (87) du type simple effet à rappel automatique, mis en oeuvre pour déverrouiller ladite cloison (10) lorsqu'elle est accrochée audit chariot

5. Cellule de réfrigération selon l'une quelconque des revendications 1 à 4, **caractérisée en ce qu'** elle comporte des moyens pour accompagner et, selon le cas, effectuer de façon automatique le déplacement longitudinal de la cloison (10), lesquels moyens sont constitués d'un organe moteur (21) qui est disposé sur le chariot (13), lequel organe moteur, du type réversible, est actionnable par le boîtier de la commande à distance (27), et il coopère, par le biais d'un jeu de poulies (60, 61), avec une courroie crantée (22) qui est installée sous le pavillon (4), tendue parallèlement aux glissières (15) sur une longueur du même ordre que la longueur de ces dernières, lesquelles poulies, au nombre de trois dont l'une, située entre les deux autres, est motrice, sont disposées en triangle pour obtenir un enroulement important sur ladite poulie motrice (60).

6. Cellule de réfrigération selon l'une quelconque des revendications 1 à 5, **caractérisée en ce qu'**elle comporte des moyens de verrouillage et d'ancrage du chariot (13) par rapport au pavillon (4), lesquels moyens sont constitués d'une came (83) articulée sur la traverse arrière (34) dudit chariot, et d'un vérin (82) du type simple effet avec rappel automatique, qui maintient ladite came en position active de verrouillage, laquelle came (83) comporte un doigt (80) qui coopère avec un rail d'ancrage (25) du type rail perforé, lequel rail est solidaire dudit pavillon (4).

7. Cellule de réfrigération selon l'une quelconque des revendications 1 à 6, **caractérisée en ce que** la cloison (10) comporte des moyens qui permettent de réaliser à la fois son étanchéité et son propre verrouillage lorsqu'elle est en position active verticale pour fractionner l'espace interne de ladite cellule, lesquels moyens sont actionnables à partir du boîtier (27) de commande à distance et sont constitués d'organes gonflables faisant office de joints d'étanchéité (63), lesquels joints sont installés au moins sur les flancs de ladite cloison (10).

8. Cellule de réfrigération selon la revendication 7, **caractérisée en ce qu'**elle comporte des joints gonflables (63) constitués d'un patin central (68) qui est disposé entre deux soufflets (67), lequel patin (68) assure l'étanchéité entre la cloison (10) et les parois latérales (3) de la cellule, faisant office d'organe de verrouillage pour immobiliser ladite cloison lorsqu'elle est en position active verticale de fractionnement, par frottement sur lesdites parois latérales.

9. Cellule de réfrigération selon la revendication 7, **caractérisée en ce qu'**elle comporte, sur le chariot (13), un capteur (77) qui permet de détecter la position active verticale de la cloison (10), lequel capteur, en forme de commutateur à contact normalement ouvert, se ferme lorsque ladite cloison est en position verticale et autorise le gonflage des joints d'étanchéité (63) qui sont disposés sur les flancs de ladite cloison (10).

10. Cellule de réfrigération selon l'une quelconque des revendications 1 à 9, **caractérisée en ce qu'**elle comporte des aménagements relatifs à l'implantation d'un dispositif de fractionnement de son espace interne, lesquels aménagements sont constitués des moyens d'alimentation des différents organes de manoeuvre et en particulier : - d'au moins un conduit (115) pour l'alimentation en air comprimé desdits organes de manoeuvre et des joints (63), - d'au moins un câble électrique (116) pour l'alimentation des composants du système de commande, - d'un réservoir (53) d'air comprimé affecté à l'alimentation desdits organes de manoeuvre et desdits joints (63),
lesquels conduit et câble sont, par exemple, intégrés dans l'épaisseur du pavillon (4) et ils s'étendent jusqu'à l'arrière du pavillon (4) d'où ils repartent vers ledit chariot (13), portés et guidés sur un support (24) constitué d'un câble tendu longitudinalement sous ledit pavillon (4), au-dessus dudit chariot, lesquels moyens d'alimentation se présentent sous la forme de serpentins.

11. Cellule de réfrigération selon l'une des revendications 1 à 10, **caractérisée en ce qu'**elle comporte une cloison (10) constituée de deux panneaux (110) et (111), lesquels panneaux sont séparés par un système de joint d'étanchéité vertical (112), et chaque panneau est associé à un mécanisme de manoeuvre (20).

## Claims

1. A refrigerated storage unit having an internal space that is defined by a floor (2), by side walls (3), by a ceiling or roof (4), by a front wall (5) provided with an evaporator (7), and by a back wall (6) provided with access doors, which internal space is subdividable by means of a subdivision device that is made up of:
- a partition (10) mounted to move longitudinally between the front and the back of said unit, which partition is carried by pins embodying a transverse axis (14) so as to be retractable up under said roof by pivoting, which pins embodying the axis (14) are secured to a carriage (13) that is guided longitudinally at the top portion of said unit; and of
- means for locking the position of said partition (10) when it is in the vertical active subdivision position and when it is in the horizontal inactive position, retracted up under said roof (4);
said refrigerated storage unit being **characterized in that**, at said subdivision device, it is provided with means for automatically positioning said partition (10), either horizontally or vertically, which means are constituted by: - at least one drive mechanism (20) for driving said partition, which mechanism is interposed between said carriage (13) and said partition; - a control system comprising a box (27) that makes it possible for said partition to be caused to be driven remotely, which box is outside the region within which said partition moves, and is available to the operator; and - means for feeding and powering said drive mechanism in particular, which drive mechanism (20) is received within the overall thickness of said carriage (13), between the roof (4) and the back face of the partition (10) when said partition is in the horizontal inactive position retracted up under said carriage.

2. A refrigerated storage unit according to claim 1, **characterized in that** the carriage (13) is made up of two longitudinal members (31,32) disposed under runners (15), of a front crosspiece (33) that supports the pins embodying the hinge axis (14) of the partition (10), and of a back crosspiece (34), and **in that** the drive mechanism (20) comprises actuation members and, in particular:
- at least one drive actuator (44) that is interposed between the front of said carriage (13) and a force-multiplier arm (45) that is hinged to a longitudinal member; and
- a movement-transmission link (46) that is interposed between said force-multiplier arm (45) and a crank disposed at the top portion of the partition (10), under the transverse axis (14) about which said partition is hinged to said carriage, which link (46) is substantially parallel to said actuator (44) and to said longitudinal members (31) and (32) of said carriage (13), and is situated between said actuator and the corresponding longitudinal member at a distance from said actuator (44) that makes it possible to multiply the thrust force by five, for example.

3. A refrigerated storage unit according to claim 2, **characterized in that** it is provided with means for actuating the partition (10) that are constituted by a pair of drive mechanisms (20), which pair comprises: - actuators (44) disposed in the central portion of the carriage (13), longitudinally, which actuators are hinged at one end to the front crosspiece (33) of said carriage, and they are carried and guided at the other end via a support (71), which support co-operates with a transverse rail (50) that is secured to the longitudinal members (31, 32) of said carriage; - force-multiplier arms (45) that are hinged to the side longitudinal members (31, 32) of said carriage; and - links (46) disposed parallel to said actuators (44) and to said longitudinal members, each link being disposed between a respective actuator and the corresponding longitudinal member; the entire set of mechanisms being accommodated within the thickness of said carriage (13).

4. A refrigerated storage unit according to claim 3, **characterized in that** it is provided with means (74) for locking the partition (10) in the horizontal inactive position, which means are constituted by at least one hook (85) that is disposed on and hinged to the back crosspiece (34) of the carriage (13), which hook is driven by means of an actuator of the single-acting type with automatic return, which actuator is implemented to unlock said partition (10) when said partition is fastened to said carriage

5. A refrigerated storage unit according to any one of claims 1 to 4, **characterized in that** it is provided with means for accompanying and, depending on the situation, for automatically effecting the longitudinal movement of the partition (10), which means are constituted by a motor drive member (21) which is disposed on the carriage (13), which motor drive member, which is of the reversible type, is actuatable by the remote control box (27), and it co-operates, via a set of pulleys (60, 61), with a cog belt (22) that is installed under the roof (4), and that extends in tensioned manner parallel to the runners (15) over a length of the same order of magnitude as the length of said runners, which pulleys, of which there are three and one of which is a driving pulley, are disposed in a triangle configuration so as to obtain a large amount of wrap around said driving pulley (60).

6. A refrigerated storage unit according to any one of claims 1 to 5, **characterized in that** it is provided with means for locking and anchoring the carriage (13) relative to the roof (4), which means are constituted by a cam (83) hinged to the back crosspiece (34) of said carriage, and by an actuator (82) of the single-acting type with automatic return, which actuator holds the cam in the active locking position, which cam (83) is provided with a finger (80) that co-operates with an anchor rail (25) of the perforated rail type, which rail is secured to said roof (4).

7. A refrigerated storage unit according to any one of claims 1 to 6, **characterized in that** the partition (10) is provided with means that make it possible both to seal it and to lock it when it is in the vertical active position for subdividing the internal space of said unit, which means are actuatable from a remote control box (27) and are constituted by inflatable members acting as seals (63), which seals are installed at least on the side edges of said partition (10).

8. A refrigerated storage unit according to claim 7, **characterized in that** it is provided with inflatable seals (63), each of which is made up of a central shoe (68) that is disposed between two beads (67), which shoes (68) provide sealing between the partition (10) and the side walls (3) of the unit, and act as locking members for holding said partition stationary when it is in the vertical active subdivision position, by friction on said side walls.

9. A refrigerated storage unit according to claim 7, **characterized in that**, on the carriage (13), it is provided with a sensor (77) that makes it possible to detect the vertical active position of the partition (10), which sensor, in the form of a normally-open contact switch, closes when said partition is in the vertical position and allows the seals (63) that are disposed on the side edges of said partition (10) to be inflated.

10. A refrigerated storage unit according to any one of claims 1 to 9, **characterized in that** it is provided with arrangements for accommodating a subdivision device in its internal space, which arrangements are constituted by means for feeding and powering the various drive members and in particular: - by at least one pipe (115) for feeding compressed air to said drive members and to said seals (63); - by at least one electrical cable (116) for powering the components of the control system; and - by a reservoir (53) of compressed air that is assigned to feeding said drive members and said seals (63);
said pipe and said cable are, for example, integrated into the thickness of the roof (4), and they extend to the back of the roof (4), from which they go back towards said carriage (13), and they are carried and guided on a support (24) constituted by a cable extending in tensioned manner longitudinally under said roof (4), above said carriage, which feed and power means are in the form of coil cords.

11. A refrigerated storage unit according to any one of claims 1 to 10, **characterized in that** it includes a partition (10) made up of two panels (110) and (111), which panels are separated by a vertical seal system (112), and each panel is associated with a respective drive mechanism (20).

## Patentansprüche

1. Kühlzelle, deren Innenraum durch einen Boden (2), Seitenwände (3), eine Decke bzw. einen Dachhimmel (4), eine mit einem Verdampfer (7) ausgestattete vordere Wand (5) und eine mit Zugangstüren ausgestattete hintere Wand (6) begrenzt ist und der mittels einer Unterteilungsvorrichtung unterteilbar ist, die umfasst:
- eine zwischen dem vorderen Teil und dem hinteren Teil der Zelle längsverschiebbare Trennwand (10), die zum Einziehen unter die Decke von einer Querachse (14) getragen wird, wobei die Achse (14) fest mit einem am oberen Teil der Zelle längsgeführten Schlitten (13) verbunden ist;
- Mittel zum Verriegeln der Trennwand (10) in einer wirksamen Senkrecht-Unterteilungsstellung und einer unwirksamen Waagerechtstellung, in der sie unter der Decke (4) eingezogen ist;
**dadurch gekennzeichnet, dass** sie an der Unterteilungsvorrichtung Mittel zum automatischen Positionieren der Trennwand in einer senkrechten oder waagerechten Stellung umfasst, wobei diese Mittel aufweisen: - mindestens eine zwischen dem Schlitten (13) und der Trennwand (10) angeordnete Vorrichtung (20) zum Bewegen der Trennwand, - eine Steueranordnung mit einem Bediengerät (27) zum Fernbedienen der Trennwandbewegung, wobei das Bediengerät dem Bediener außerhalb des Verschwenkbereiches der Trennwand (10) zur Verfügung steht, und - Mittel zum Beaufschlagen der Bewegungsvorrichtung, die innerhalb der Außenmaße des Schlittens (13), in dessen Dicke, zwischen der Decke (4) und der Rückseite der Trennwand (10) angeordnet ist, wenn diese in unwirksamer Waagerechtstellung unter dem Schlitten eingezogen ist.

2. Kühlzelle nach Anspruch 1, **dadurch gekennzeichnet, dass** der Schlitten (13) von zwei, unter den Gleitschienen (15) angeordneten Längsträgern (31, 32), einem die Gelenkachse (14) der Trennwand (10) tragenden vorderen Querträger (33) und einem hinteren Querträger (34) gebildet ist, und dass die Bewegungsvorrichtung (20) folgende Betätigungsorgane umfasst, und zwar insbesondere:
- mindestens einen zwischen dem vorderen Teil des Schlittens (13) und einem an einem Längsträger angelenkten Kraftverstärkungsarm (45) angeordneten Bewegungszylinder (44);
- eine Bewegungsübertragungsstange (46) zwischen dem Kraftverstärkungsarm (45) und einer am oberen Teil der Trennwand (10) unter der Gelenkquerachse (14) der Trennwand auf dem Schlitten angeordneten Kurbel, wobei die Bewegungsübertragungsstange (46) im Wesentlichen parallel zum Zylinder (44) und zu den Längsträgern (31) und (32) des Schlittens (13) verläuft und dazwischen in einem Abstand zum Zylinder (44) angeordnet ist, mit dem dessen Vorschubkraft beispielsweise um das Fünffache erhöht werden kann.

3. Kühlzelle nach Anspruch 2, **dadurch gekennzeichnet, dass** sie Mittel zum Betätigen der Trennwand (10) aufweist, bestehend aus einem Paar von Bewegungsvorrichtungen (20), die umfassen: - im mittleren Teil des Schlittens (10) in Längsrichtung angeordnete Zylinder (44), die einerseits am vorderen Querträger (33) des Schlittens angelenkt sind und andererseits von einer Halterung (71) getragen und geführt werden, wobei die Halterung mit einer Querschiene (50) zusammenwirkt, die mit den Längsträgern (31, 32) des Schlittens fest verbunden ist, - an den seitlichen Längsträgern (31, 32) des Schlittens angelenkte Kraftverstärkungsarme (45), - zwischen den Zylindern (44) und parallel zu ihnen und den Längsträgern angeordnete Stangen (46), wobei die gesamte Anordnung im Umfangsbereich und in der Dicke des Schlittens (13) angeordnet ist.

4. Kühlzelle nach Anspruch 3, **dadurch gekennzeichnet, dass** sie Mittel (74) zum Verriegeln der Trennwand (10) in unwirksamer Waagerechtstellung umfasst, die von mindestens einem Haken (85) gebildet sind, der am hinteren Querträger (34) des Schlittens (13) angeordnet und angelenkt ist und der über einen einfach wirkenden Zylinder (87) mit automatischer Rückstellung zum Entriegeln der Trennwand (10), wenn diese am Schlitten eingehängt ist, bewegt wird.

5. Kühlzelle nach einem der Ansprüche 1 bis 4, **dadurch gekennzeichnet, dass** sie Mittel zum Unterstützen und ggf automatischen Ausführen der Längsbewegung der Trennwand (10) umfasst, die aus einem auf dem Schlitten (13) angeordneten umsteuerbaren Antriebsorgan (21) bestehen, das mit dem Fernbediengerät (27) betätigt werden kann und über einen Satz von Riemenscheiben (60, 61) mit einem unter der Decke (4) installierten, parallel zu den Gleitschienen (15) und auf deren Länge verlaufenden Zahnriemen (22) zusammenwirkt, wobei die insgesamt drei Riemenscheiben, von denen eine, nämlich diejenige, die sich zwischen den beiden anderen befindet ist, die Treibscheibe ist, im Dreieck angeordnet sind, um eine hohe Umschlingung der Treibscheibe (60) zu erhalten.

6. Kühlzelle nach einem der Ansprüche 1 bis 5, **dadurch gekennzeichnet, dass** sie Mittel zum Verriegeln und zum Verankern des Schlittens (13) gegenüber der Decke (4) aufweisen, die von einem am hinteren Querträger (34) des Schlittens angelenkten Nocken (83) und einem einfach wirkenden Pneumatikzylinder (82) mit automatischer Rückstellung, der den Nocken in der wirksamen Verriegelungsstellung hält, gebildet sind, wobei der Nocken (83) einen Finger (80) aufweist, der mit einer fest mit der Decke (4) verbundenen, mit Lochungen versehenen Verankerungsschiene (25) zusammenwirkt.

7. Kühlzelle nach einem der Ansprüche 1 bis 6, **dadurch gekennzeichnet, dass** die Trennwand (10) Mittel zu ihrer Abdichtung und Selbstverriegelung in ihrer wirksamen Senkrechtstellung zum Unterteilen des Zelleninnenraums aufweist, die von einem Fernbediengerät (27) aus betätigt werden können und die aus aufblasbaren, als Dichtung (63) fungierenden Organen bestehen, die mindestens an den Seitenflächen der Trennwand (10) angeordnet sind.

8. Kühlzelle nach Anspruch 7, **dadurch gekennzeichnet, dass** sie aufblasbare Dichtungen (63) umfasst, die aus einem zwischen Balgen (67) angeordneten mittleren Schuh (68) bestehen, der die Trennwand (10) gegenüber den Seitenwänden (3) der Zelle abdichtet und gleichzeitig als Verriegelungsorgan dient, indem er die Trennwand durch Reibung an den Seitenwänden in ihrer wirksamen Senkrecht-Unterteilungsstellung verriegelt.

9. Kühlzelle nach Anspruch 7, **dadurch gekennzeichnet, dass** sie einen am Schlitten (13) angeordneten Sensor (77) zum Erfassen der wirksamen Senkrechtstellung der Trennwand (10) umfasst, der als im Ruhezustand geöffneter Schalter ausgebildet ist und der schließt, wenn sich die Trennwand der Senkrechtstellung befindet und damit das Aufblasen der an den Seitenflächen der Trennwand (10) angeordneten Dichtungen (63) freigibt.

10. Kühlzelle nach einem der Ansprüche 1 bis 9, **dadurch gekennzeichnet, dass** sie Einrichtungen zur Unterbringung einer Vorrichtung zur Unterteilung ihres Innenraums aufweist, die aus Mitteln zum Versorgen bzw. Beaufschlagen der einzelnen Bewegungsorgane bestehen, und zwar insbesondere aus: - mindestens einer Leitung (115) zum Beaufschlagen mit Druckluft der einzelnen Bewegungsorgane und der aufblasbaren Dichtungen, - mindestens einem Stromkabel (116) zum Versorgen der Komponenten der Steueranordnung, - einem Druckluftbehälter (53) zum Beaufschlagen der Bewegungsorgane und der aufblasbaren Dichtungen (63),
wobei die Leitung und das Kabel beispielsweise in die Dicke der Decke (4) integriert sind und sich bis zum hinteren Teil der Decke (4) erstrecken, von wo aus sie, von einer aus einem in Längsrichtung gespannten, unter der Decke (4) über dem Schlitten verlaufenden Seil gebildeten Halterung (24) getragen und geführt, zum Schlitten weitergeführt werden, wobei die Versorgungs- bzw. Beaufschlagungsmittel in diesem Bereich in Form von Rohrschlangen gebildet sind.

11. Kühlzelle nach einem der Ansprüche 1 bis 10, **dadurch gekennzeichnet, dass** sie eine aus zwei Platten (110) und (111) bestehende Trennwand (10) aufweist, wobei die Platten durch eine senkrecht verlaufende Dichtungsanordnung (112) voneinander getrennt sind und jede Platte einer Bewegungsvorrichtung (20) zugeordnet ist.
